# EUROPÄISCHE PATENTANMELDUNG

(11) **EP 1 045 015 A2**
(43) Veröffentlichungstag der Anmeldung: **18.10.2000**
(21) Anmeldenummer: 00106792.5
(22) Anmeldetag: 30.03.2000
(51) Int. Cl.: C09J 7/04, C09J 5/00, B32B 31/04

(54) **Folie mit einem unterbrochen flächig aufgetragenen reaktiven Haftmittel und Verfahren zu ihrer Herstellung**

(30) Priorität: 13.04.1999 DE 19916627
(71) Anmelder: Firma Carl Freudenberg, 69469 Weinheim (DE)
(72) Erfinder: Schmitt, Erich, 69469 Weinheim (DE); Kümpel, Thomas, 69502 Hemsbach (DE); Grynaeus, Peter, Dr., 69488 Birkenau (DE)

(57) **Zusammenfassung**

Eine Folie (1) wird zum Zweck der Verbindung mit einer weiteren Materialbahn mit einem unterbrochen flächig aufgetragenen reaktiven Haftmittel (2) versehen. Zur nachfolgenden Verbindung mit der Materialbahn ist ein Partikel aufweisender Schmelzkleber mit dem Haftmittel verbunden. Hierdurch wird eine unerwünschte Verbindung des Haftmittels beim Aufrollen der Folie vermieden und die Folie ist unbegrenzt lagerfähig.

## Beschreibung

### Technisches Gebiet

Die Erfindung betrifft eine Folie mit einem unterbrochen flächig aufgetragenen reaktiven Haftmittel und ein Verfahren zu ihrer Herstellung. Derartige Folien werden beispielsweise zur Herstellung von Membranfolienlaminaten bzw. Laminaten unter Verwendung eines klebenden Mediums verwendet, die anschließend zu Oberbekleidung weiterverarbeitet werden.

### Stand der Technik

Aus der DE-OS 36 22 559 ist ein Verfahren zum Ausrüsten der Oberfläche einer Folie aus schweißbarem Polymerwerkstoff mit Vorsprüngen bekannt, bei dem die Partikel aus mit dem Folienstoff verschweißbaren Werkstoff auf die Oberfläche aufgebracht werden, während sich diese und/oder die Partikel auf Schweißtemperatur befinden.

Im "Handbuch der textilen Fixiereinlagen" Peter Sroka, 3. Auflage 1993, Konstanz, Hartung Gorre-Verlag sind auf den Seiten 131 bis 141 verschiedene Verfahren zur Erzielung eines doppelschichtig aufgebauten Klebemassepunktes aus Schmelzklebern unterschiedlicher Schmelzviskosität bekannt, die die Verbindung einer Einlage mit einem Oberstoff, beispielsweise eines Kleidungsstücks, ermöglichen. Dies thermoplastischen und doppelschichtig aufgebauten Schmelzkleber unterschiedlicher Viskosität eignen sich für eine Zweistufenlaminierung, da sie zunächst auf einer Materialbahn aufgetragen werden und erst zu einem späteren Zeitpunkt mit der zweiten Materialbahn unter Einwirkung von Druck und Temperatur zusammengefügt werden.

Insbesondere bei wärmeempfindlichen Materialbahnen ist die Aufbringung von zwei Schmelzklebern mit einer hohen und einer niedrigen Schmelztemperatur nachteilig.

Einlagestoffe mit Doppelpunktbeschichtung sind bereits aus der DE 2 214 236 bekannt. Dabei wird nach dem Prinzip des Rotationsfilmdrucks mit zwei innenliegenden Rakelblättern, welche die Pasten unterschiedlicher Schmelzkleberzusammensetzung unmittelbar hintereinander durch dieselben Schablonenlöcher drücken, gearbeitet, so daß ein Pastenpunkt mit schichtenförmigem Aufbau entsteht.

Nachteilig ist jedoch, daß beim klassischen Doppelpunkt die Paste (Dispersionsschmelzkleber) als Unterpunkt aufgetragen wird, und Wasser verdampft werden muß. Mittlere Sintertemperaturen sind notwendig; dennoch ist eine Rückschlaggefahr bei niedrigen Basisgewichten vorhanden. Ferner benötigt ein Doppelpunkt mit vernetzendem Acrylatunterpunkt (Binderdispersion, z.B. auf Acrylatbasis) hohe Temperaturen zum Vernetzen des Acrylats und zum Ansintern des aufgebrauchten Polymerpulvers zum Unterpunkt.

Weiterhin ist es aus der EP 0 238 014 B1 bekannt, thermoplastische Membranfolien mit wäßrigen thermoplastischen Polymerdispersionen zu beaufschlagen. Dieses Verfahren ist insbesondere mit hydrophilen Membranen sehr aufwendig in der Herstellung, da besondere mechanische Vorrichtungen erforderlich sind, um ein Schrumpeln der Folie bereits beim Bedrucken zu verhindern.

Thermoplastische, aus der Schmelze hergestellte Klebemassenpunkte (Hotmelt), die ausreichende Echtheit nach den Pflegebehandlungen (Wäsche, chemische Reinigung) aufweisen, benötigen hohe Auftragstemperaturen, bei denen insbesondere empfindliche, hydrophile Membrane thermisch zu stark beansprucht werden.

Der Erfindung liegt die Aufgabe zugrunde, Materialbahnen bei relativ niedrigen Temperaturen mit einem Haftmittel zu versehen, wobei die Materialbahn zu einem späteren Zeitpunkt mit einer weiteren Materialbahn verbindbar sein soll.

### Darstellung der Erfindung

Diese Aufgabe wird erfindungsgemäß bei einer Folie der eingangs genannten Art durch die kennzeichnenden Merkmale von Anspruch 1 gelöst. Auf vorteilhafte Ausgestaltungen nehmen die Unteransprüche Bezug.

Dadurch, daß mit dem Haftmittel ein partikelförmiger Schmelzkleber verbunden ist, kann bei niedrigen Temperaturen ein Auftrag von Haftmittel erfolgen, wobei der Einsatz von Schmelzklebern zur Herstellung der Verbindung einer weiteren Materialbahn bei ebenfalls niedrigen Temperaturen möglich ist. Eine Trocknung ist nicht erforderlich, so daß die Vorrichtungen zum Festhalten der Folie entfallen können.

Ist der Schmelzkleber gegenüber der Folie nichtreaktiv und/oder bei natürlichen klimatischen Umgebungstemperaturen gegenüber der Folie nichtklebrig, so kann die beschichtete Materialbahn ohne Gefahr der Verklebung aufgerollt werden. Das reaktive Haftmittel kann beim Lagern noch vollends ausreagieren und die Verbindung zu dem Schmelzkleber noch verstärken, ohne daß dabei die darüberliegenden Lagen verkleben. Die Folie ist daher unbegrenzt lagerfähig und kann zu beliebiger Zeit thermisch zu entsprechenden Substraten laminiert werden. Wesentlich hierbei ist, daß das reaktive Haftmittel vollständig von dem partikelaufweisenden Schmelzkleber bedeckt ist.

Die Folie kann mikroporös oder hydrophil sein. Insbesondere bei hydrophilen Folien mit der Möglichkeit eines chemischen Stofftransports aufgrund eines Wärme- und/oder Feuchtigkeitsgradienten durch die Folie hindurch ist es vorteilhaft, auf die Trocknung verzichten zu können.

Vorteilhafterweise ist das reaktive Haftmittel feuchtevernetzend. Zum Ausreagieren reicht die in der Luft enthaltene Feuchtigkeit aus, was zu einer Erschöpfung der Klebeleistung des Haftmittels führt.

Als reaktives Haftmittel kommt ein reaktiver Hotmelt zum Einsatz, vorteilhafterweise ein feuchtevernetzendes Polyurethan.

Vorteilhafterweise kann das Material des Schmelzklebers aus Co-Polyester (Co-PES), Co-Polyamid (Co-PA), Ethylenvinylacetat (EVA),thermoplastisches Polyurethan (TPU) oder Polyethylen (PE) bestehen. Die Auswahl wird in Abhängigkeit der Endanwendung getroffen, beispielsweise in Abhängigkeit vom Oberstoff oder von der geforderten textilen Pflegebeständigkeit.

Dadurch, daß der Schmelzkleber mit einer zweiten Materialbahn verklebt ist, entsteht ein Laminat. Dabei erfolgt das Verkleben mit der zweiten Materialbahn zu einem beliebigen nachfolgenden Zeitpunkt. Die zweite Materialbahn kann ein textiles oder nicht textiles Flächengebilde ein.

Dadurch, daß beim erfindungsgemäßen Verfahren auf die Folie ein reaktiver Haftmittel flächig unterbrochen aufgebracht wird, daß auf den reaktiven Haftmittel ein Partikel aufweisender Schmelzkleber aufgebracht wird und daß sich die Partikel des Schmelzklebers mit dem reaktiven Haftmittel verbindet, ist es möglich, insgesamt niedrige Temperaturen bei der Herstellung zu verwenden.

Zur Vermeidung eines unnötigen Materialeinsatzes können überschüssige, nicht mit dem reaktiven Haftmittel verbundene Partikel des Schmelzklebers von der Folie entfernt werden. Um das reaktive Haftmittel voll mit den Partikeln zu bedecken, wird die Folie in Bewegung versetzt, so daß die aufgestreuten Partikel, die noch nicht gebunden sind, mehrmals über die Folie wandem können, bevor sie entfernt werden. Dabei kann die Folie zusätzlich durch einen Walzenspalt geführt werden.

Vorteilhafterweise weist die Folie eine der Eigenschaften der vorstehend beschriebenen Folie auf.

Vorteilhafterweise kann die erste Folie unter Einwirkung von Temperatur und Druck mittels des Schmelzklebers mit der zweiten Materialbahn verbunden werden. Dabei kann eine vorstehend beschriebene Folie verwendet werden.

### Kurzbeschreibung der Zeichnung

Die Erfindung wird nachfolgend anhand der Zeichnung weiter verdeutlicht. Es zeigt:
- Fig. 1: eine schematische Ansicht auf eine mit dem reaktiven Haftmittel und dem Schmelzkleber versehene Folie, die
- Fig. 2: einen schematischen Querschnitt durch eine mit dem reaktiven Haftmittel und dem Schmelzkleber versehene Folie, die
- Fig. 2a: einen schematischen Querschnitt durch die Folie gemäß Fig. 2 nach Durchführung durch einen Walzenspalt, die
- Fig. 3: einen schematischen Querschnitt durch einen Laminat bestehend aus einer Folie und einer zweiten Materialbahn und die
- Fig. 4: einen Verfahrensablauf zur Herstellung einer Folie aus Fig. 1 und 2.

### Ausführung der Erfindung

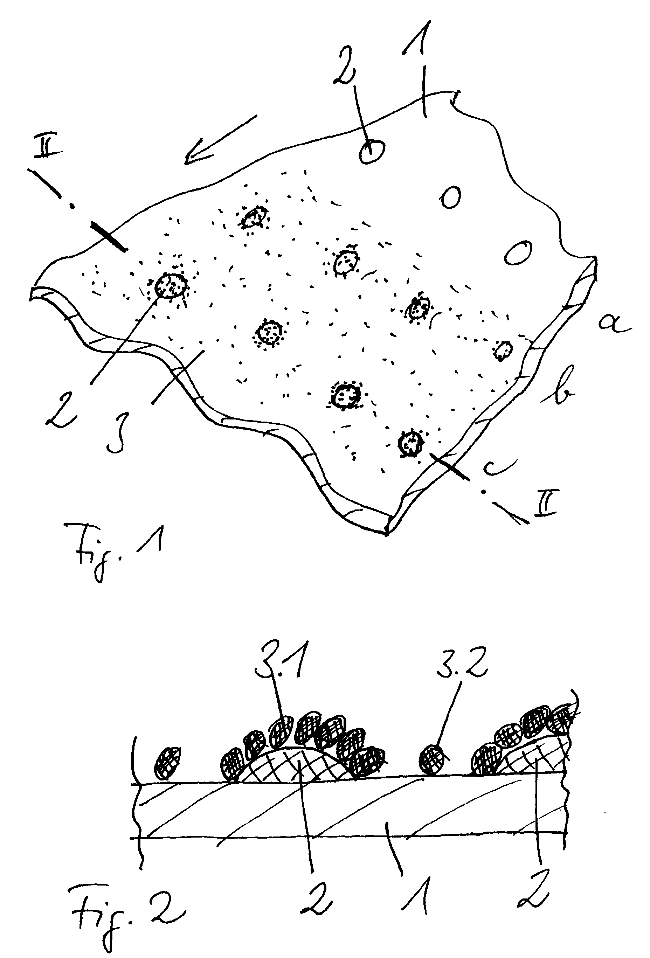

Die in den Fig. 1 gezeigte Folie 1 ist mit einem reaktiven Haftmittel in Form von Klebemassepunkten 2 beschichtet. Diese Klebemassenpunkte 2 sind im Ausführungsbeispiel in mehreren Reihen a, b, c nebeneinanderliegend verteilt.

Die Klebemassenpunkte 2 sind mit Ausnahme der in der Reihe a angeordneten Klebemassenpunkte mit Partikeln 3 eines Schmelzklebers verbunden, welche auf die Materialbahn 1 aufgestreut wurden. Hierzu können zwei Prinzipien zur Abwendung kommen, nämlich ein Auftrag mit der oder gegen die Schwerkraft durch streuen bzw. aufblasen.

Durch entsprechende Bewegung der Folie 1 werden die Partikel 3 auf der Materialbahn 1 selbst in Bewegung versetzt, so daß sie zu den Klebemassenpunkten 2 gelangen und sich mit diesen verbinden. Die Verbindung erfolgt dabei aufgrund der Materialeigenschaften der Klebemassenpunkte 2, die Partikel 3 sind in diesem Zustand gegenüber der Folie 1 nicht reaktiv und nicht klebend.

In Fig. 2 ist ein Querschnitt durch die Reihe c aus Fig. 1 dargestellt. Zu erkennen ist die Folie 1 mit den darauf befindlichen Klebemassenpunkten 2 und den Partikeln 3 des Schmelzklebers. Die Partikel 3 sind zum einen mit den Klebemassepunkten 2 verbunden, liegen zum andern jedoch lose auf der Folie 1.auf. Die lose aufliegenden Partikel 3.2 lassen sich ohne weiteres von der Folie 1 entfernen, wenn die Klebemassenpunkte 2 vollständig besetzt sind.

In Fig.2a ist das Aggregat aus Klebmassepunkt 2 und Partikel 3 nach der Durchführung durch einen Walzenspalt dargestellt. Der Walzenspalt führt zu einer Verringerung der Höhe auf das 0,95 bis 0,5-fach der ursprünglichen Höhe. Dies geschieht zum einen dadurch, daß die Partikel 3.2 in den noch nicht ausgehärteten oder erstarrten Klebemassepunkt 2 hineingedrückt werden zum andem dadurch, daß die Partikel 3.3 verformt wurden. Um dies zu erreichen, ist es erforderlich, daß mittels des Walzenspalts ein entsprechender Druck ausgeübt wird.

Aus den schematischen Darstellungen ergibt sich ohne weiteres, daß bei vollständig mit Partikel 3.1. des Schmelzklebers abgedeckten Klebemassenpunkten 2 ein aufeinanderlegen verschiedener Folie möglich ist, ohne daß diese miteinander verkleben. Vorausgesetzt wird hierbei, daß die Partikel 3 des Schmelzklebers gegenüber der Materialbahn 1 nicht reaktiv und nicht klebend sind.

In Fig. 3 ist ein aus der ersten Folie 1 und aus einer Materialbahn 4 bestehendes Laminat 5 gezeigt. Das Laminat 5 wurde dadurch erhalten, daß die in Fig. 1 und 2 dargestellte Folie 1 unter Zufuhr von Wärme und Druck mit der Materialbahn 4 verbunden wurde, wobei die Partikel 3 des Schmelzklebers zu einer Schmelzzone 3.4 verschmolzen sind. Die Klebemassenpunkte 2 aus reaktivem Haftmittel bleiben im Gegensatz zu den Partikeln des Schmelzklebers im wesentlichen unverändert.

Als reaktives Haftmittel kommen reaktive Hotmelt-Systeme in Betracht, die bei relativ niedrigen Schmelztemperaturen auf empfindliche Folien, insbesondere Membranfolien aufgetragen werden können. Durch die Verbindung mit den Partikeln eines Schmelzklebers, insbesondere thermoplastische Polymeren, ist eine Verbindung mit einer Materialbahn unter Einwirkung von Druck und/oder Temperatur möglich.

Die Erfindung wird anhand der nachstehend Beispiele weiter erläutert.

### Beispiel 1:

Eine 0,01 mm dicke Membranfolie der Art "Sympatex" (Produktbezeichnung der AKZO) wird mit 3 g/m2 eines feuchtevernetzenden Polyurethans nach dem Screenprint-Verfahren mit einer Druckschablone CP 52 mit 52 Punkten/m2 bei einer Temperatur von 80°C aufgedruckt. Unmittelbar anschließend, während der offenen Zeit des Reaktivhotmelts, werden 20 g/m2 eines thermoplastischen Polyesterpulvers von 0,08 bis 0,16 mm Kornfraktion flächig aufgestreut. Die aufgestreuten Polymerpartikel bleiben an den klebrigen Hotmeltpunkten haften, wobei die Verbindung bei Bedarf durch leichten Druck unterstützt wird, der bei der Durchführung der Folie durch einen Walzenspalt erzeugt wird.

Üüberschüssige Pulverpartikel werden durch Absaugen entfernt, so daß insgesamt 7 g/m2 des Polymerpulvers mit der Reaktivhaftmasse verbunden bleiben. Die beschichtete Membranfolie wird aufgerollt. Diese derart mit Schmelzkleber versehene Folie kann zu einem beliebigen späteren Zeitpunkt zu einer geeigneten textilen Fläche bei 150°C an einer Durchlaufpresse laminiert werden.

### Beispiel 2:

Eine 0,01 mm Membranfolie der Art "Pebax" (Produktbezeichnung der Atochem) wird mit 4 g/m2 eines feuchtevernetzenden Polyurethans nach dem Roto-Therm-Verfahren mit einer Gravurwalze CP 37 mit 37 Punkten/m2 bei 95°C aufgedruckt. Unmittelbar anschließend, während der offenen Zeit des Reaktivhotmelts, werden 24 g/m2 eines thermoplastischen Polyamid-Pulvers von 0 bis 0,160 mm Kornfraktion durch Blasen beispielsweise nach dem System Nordson aufgebracht.

Die aufgestreuten Polymerpartikel bleiben an den klebrigen Hotmeltpunkten haften, wobei die Verbindung bei Bedarf durch leichten Druck unterstützt wird. Überschüssige Pulverpartikel werden durch Abklopfen oder Abrütteln entfernt, so daß insgesamt 8 g/m2 des Polymerpulvers mit Reaktivhaftmasse verbunden bleibt. Die beschichtete Membranfolie wird aufgerollt. Diese derart mit Schmelzkleber versehene Folie kann zu einem beliebigen späteren Zeitpunkt zu einer geeigneten textilen Fläche bei 130°C in einer Fixierpresse laminiert werden.

Sowohl der Auftrag des pulverförmigen Schmelzklebers als auch das Entfernen des Überschusses kann mit oder gegen die Schwerkraft erfolgen durch Aufstreuen und Abrieseln einerseits bzw. durch Blasen und Absaugen andererseits. So ermöglicht ein Auftrag durch Blasen entgegen der Schwerkraftrichtung auf eine über Kopf geführte Folie das Abrieseln der überschüssigen Partikel, wohingegen ein Auftrag in Schwerkraftrichtung durch Streuen durch Schütteln ein Hin- und Herwandern der Partikel ermöglicht, bevor die überschüssigen Partikel abgesaugt werden.

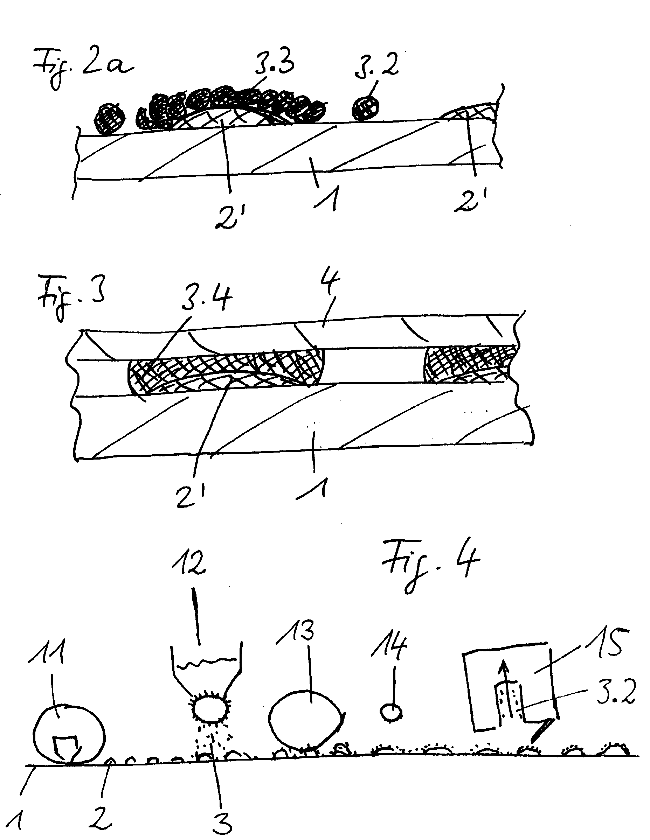

In Fig. 4 ist eine Vorrichtung zur Durchführung des erfindungsgemäßen Verfahrens dargestellt. Mittels einer Gravurwalze 11 wird feuchtevernetzendes Polyurethan als Haftmittelpunkt 2 auf eine Folie 1 aufgetragen. In einem nächsten Schritt werden Partikel 3 eines Polymerpulvers als Schmelzkleber mittels einer Streuvorrichtung 12 auf die mit Haftmittelpunkten 2 beschichtete Folie 1 in Schwerkraftrichtung aufgestreut. Mittels einer Walze 13 werden die Partikel 3 auf die Haftmittelpunkte 2 durch mechanisches Pressen innig verbunden.

Um die Reaktion des feuchtevernetzenden Polyurethans zu beschleunigen, kann eine Bedämpfungsvorrichtung 14 für Wasserdampf vorgesehen sein, wenn die Art der Folie dies gestattet.

Mittels einer Absaugvorrichtung 15 werden die überschüssigen Partikel 3.2 des Schmelzklebers von der Folie 1 entfernt, so daß auf der Folie 1 selbst nur noch die Haftmittelpunkte 2 mit den dort anhafdenten Partikelen 3.1 verbleiben.

Das Endprodukt ist eine Folie mit einem ausreagierten Reaktiv-Klebepunkt mit einer Thermoplastbeschichtung.

## Patentansprüche

1. Folie (1) mit einem unterbrochen flächig aufgetragenen reaktiven Haftmittel (2), dadurch gekennzeichnet, daß mit dem Haftmittel (2) ein partikelförmiger (3.1, 3.2) Schmelzkleber (3) verbunden ist.

2. Folie nach Anspruch 1, dadurch gekennzeichnet, daß der Schmelzkleber (3) gegenüber der Folie (12) nicht reaktiv ist.

3. Folie nach Anspruch 1 oder 2, dadurch gekennzeichnet, daß der Schmelzkleber (3) bei natürlichen klimatischen Umgebungstemperaturen gegenüber der Folie (1) nicht klebrig ist.

4. Folie nach einem der Ansprüche 1 bis 3, dadurch gekennzeichnet, daß die Folie (1) mikroporös ist.

5. Folie nach einem der Ansprüche 1 bis 4, dadurch gekennzeichnet, daß die Folie (1) hydrophil ist.

6. Folie nach einem der Ansprüche 1 bis 5, dadurch gekennzeichnet, daß das reaktive Haftmittel (2) feuchtevernetzend ist.

7. Folie nach Anspruch 6 dadurch gekennzeichnet, daß das reaktive Haftmittel (2) feuchtevernetzendes Polyurethan ist.

8. Folie nach einem der Ansprüche 1 bis 7, dadurch gekennzeichnet, daß das Material des Schmelzklebers (3) aus Co-PES, Co-PA, EVA, TPU oder PE besteht.

9. Laminat mit einer Folie nach einem der Ansprüche 1 bis 8, dadurch gekennzeichnet, daß die Folie (1) mittels des Schmelzklebers (3) mit einer zweiten Materialbahn (4) verklebt ist.

10. Laminat nach Anspruch 9, dadurch gekennzeichnet, daß die zweite Materialbahn (4) ein textiles oder nichttextiles Flächengebilde ist.

11. Verfahren zur Herstellung einer einen Schmelzkleber (3) aufweisenden Folie (1), dadurch gekennzeichnet, daß auf die Folie (1) ein reaktives Haftmittel (2) flächig unterbrochen aufgebracht wird, daß auf das noch reaktive Haftmittel (2) ein partikelförmiger (3.1, 3.2) Schmelzkleber (3) aufgebracht wird und daß sich die Partikel (3.1) des Schmelzklebers (3) mit dem reaktiven Haftmittel (2) verbinden.

12. Verfahren zur Herstellung einer Folie nach Anspruch 11, dadurch gekennzeichnet, daß die mit dem reaktiven Haftmittel (2) verbundenen Partikel (3.1) durch Druckausübung in das noch nicht ausgehärtete und/oder erstarrte reaktive Haftmittel eingedrückt werden und daß vorzugsweise überschüssige, nicht mit dem reaktiven Haftmittel verbundene Partikel (3.2) des Schmelzklebers (3) von der Folie (1) entfernt werden.

13. Verfahren zur Herstellung einer Folie nach einem der Ansprüche 11 oder 12, gekennzeichnet durch die Verwendung einer Folie (1) nach einem der Ansprüche 1 bis 8.

14. Verfahren zur Herstellung eines Laminates mit einer gemäß einem der Ansprüche 11 oder 12 hergestellten Folie, dadurch gekennzeichnet, daß die Folie (1) unter Einwir-kung von Temperatur und/oder Druck mittels des Schmelzklebers (3) mit einer Materialbahn (4) verbunden wird.

15. Verfahren nach Anspruch 14, gekennzeichnet durch die Verwendung einer Folie nach einem der Ansprüche 1 bis 10.
